# EUROPÄISCHE PATENTSCHRIFT

(11) **EP 2 936 017 B1**
(45) Veröffentlichungstag und Bekanntmachung des Hinweises auf die Patenterteilung: **25.03.2020**
(21) Anmeldenummer: 13817877.7
(22) Anmeldetag: 04.12.2013
(51) Int. Cl.: F25D 23/02, F25D 23/08

(54) **KÜHL- UND/ODER GEFRIERGERÄT**
REFRIGERATION AND/OR FREEZING APPLIANCE
APPAREIL DE RÉFRIGÉRATION ET/OU DE CONGÉLATION

(30) Priorität: 18.12.2012 DE 202012104927 U
(43) Veröffentlichungstag der Anmeldung: 28.10.2015
(73) Patentinhaber: REHAU AG + Co, 95111 Rehau (DE)
(72) Erfinder: WASCHKE, Andreas, 95111 Rehau (DE); OTT, Michael, 95111 Rehau (DE); ZIELKE, Peter, 08626 Adorf (DE); WILLERT, Manfred, 91257 Pegnitz (DE); ZEEH, Jürgen, 95194 Regnitzlosau (DE)
(86) Internationale Anmeldenummer: PCT/EP2013/003667
(87) Internationale Veröffentlichungsnummer: WO 2014/094984

(56) Entgegenhaltungen:
- WO-A1-2009/083038
- DE-A1-102010 028 414
- US-A- 3 055 193
- US-A- 3 070 852
- US-A- 5 228 240

## Beschreibung

Die Erfindung betrifft ein Kühl- und / oder Gefriergerät nach dem Oberbegriff des Anspruches 1. Dieses umfasst einen Gerätekorpus sowie eine Türbaugruppe, mit einem Türelement, wobei das Türelement an seinem Randabschnitt an einem Rahmenprofil angeordnet ist, wobei die Türbaugruppe in Schließstellung über wenigstens ein Dichtelement am Gerätekorpus angeordnet ist.

Ein gattungsgemäßes Kühl- und / oder Gefriergerät ist bspw. in der WO 2005/021886 A1 offenbart. Das Kühl- und / oder Gefriergerät umfasst dabei einen Gerätekorpus sowie eine Türbaugruppe mit einem Glaselement, wobei das Glaselement einen Scheibenverbund aus insgesamt drei Scheiben aufweist, der an seinem Randabschnitt von einem Rahmenprofil aufgenommen ist. Die Türbaugruppe ist über eine Dichtung am Gerätekorpus angeordnet, wobei zwischen dem Gerätekorpus und dem Rahmenprofil und / oder dem Randabschnitt des Scheibenverbundes ein Zwischenraum gebildet ist. Nachteilig bei dem Kühl- und / oder Gefriergerät wird gesehen, dass insbesondere die offenbarte Türbaugruppe in ihrer Herstellung sehr aufwändig und somit teuer ist. Ein weiterer Nachteil des Kühl- und / oder Gefriergerätes wird darin gesehen, dass durch die Kombination des Gerätekorpus mit der Türbaugruppe sowie dem Türelement neben der schlechteren Energieeffizienz auch die Optik des Kühl- und / oder Gefriergerätes nicht optimal ist. Ebenfalls nachteilig bei dem Kühl- und / oder Gefriergerät ist, dass die zum Innenraum weisende Scheibe des Scheibenverbundes bis in den Randbereich des Gerätekorpus geführt ist, so dass die im Innenraum des Kühl- und / oder Gefriergerätes befindliche gekühlte Luft bis in den Randbereich an die Dichtung bzw. dem gegenüberliegenden Gerätekorpus anliegt, so dass hier ebenfalls die Energiebilanz dieses Kühl- und / oder Gefriergerätes negativ beeinflusst ist.

Die DE 202005002231 U1 offenbart ein weiteres Kühl- und / oder Gefriergerät. Dieses Kühl- und / oder Gefriergerät mit einer Glastür weist einen Türrahmen auf, in den eine Verglasung eingesetzt ist, wobei der Türrahmen einen umlaufend integral einstückig geformten Kunststoffmantel aufweist, der aus einem spritzgegossenen Kunststoffprofil besteht.

Weiterhin weist der Kunststoffmantel zusätzlich einen Schaumkörper auf, der an den Kunststoffmantel hinterschäumt bzw. ausgeschäumt ist und zusätzliche Strangprofile, die eine Verbesserung der Steifigkeit erzielen sollen. Die Türbaugruppe ist in Schließstellung über ein Dichtelement am Gerätekorpus angeordnet.
Nachteilig bei diesem Kühl- und / oder Gefriergerät wird gesehen, dass dieses in seiner Herstellung sehr aufwändig und teuer ist und dass die Optik der Glastür nicht optimal ist. Ein weiterer Nachteil wird darin gesehen, dass durch die Herstellung des Türrahmens im Spritzgussverfahren die Stabilität und insbesondere das Verzugsverhalten kritisch sind.
Die WO 2009 / 083038 beschreibt ein weiteres Verschlusselement für ein Kühl-und/oder Gefriergerät. Das Verschlusselement ist an seinem Randabschnitt an einem Rahmenprofil angeordnet, wobei die Verschlussanordnung in Schließstellung über wenigstens ein Dichtelement am Gerätekorpus angeordnet ist, wobei das Rahmenprofil in Profil Längsrichtung an wenigstens einer Seite eine Basisschicht sowie wenigstens eine mit dieser verbundene Deckschicht aufweist, wobei die Basisschicht sowie die Deckschicht aus polymeren Werkstoff hergestellt ist, wobei die Deckschicht im Profillängsrichtung in wenigstens einem Eckbereich des Rahmenprofils eine größere Wanddicke aufweist, als in einem anderen Seitenbereich, sowie im Eckbereich des Rahmenprofils die Basisschicht wenigstens eine Phase, die in einem etwa stumpfen Winkel, bezogen auf wenigstens einen Seitenbereich, ausgebildet ist. Die Deckschicht ist weiterhin so ausgebildet, dass sie einen in der Wanddicke schmaleren Bereich aufweist, der an einen wesentlich dickeren Bereich angrenzt und im Übergangsbereich keine Phase, sondern einen Radius aufweist.

Hier setzt die Erfindung ein, die sich die Aufgabe gestellt hat, die Nachteile des bekannten Standes der Technik zu überwinden und ein Kühl- und / oder Gefriergerät in vorteilhafter Weise weiterzubilden, welches kostengünstig und wirtschaftlich herstellbar ist, welches energieeffizient ist und eine optisch ansprechende Türbaugruppe in einer ansprechenden Glasoptik aufweist.

Die Aufgabe wird erfindungsgemäß durch ein Kühl- und / oder Gefriergerät gemäß den Merkmalen des Anspruches 1 gelöst. Weitere vorteilhafte Ausgestaltungen sind in den Unteransprüchen beschrieben.

Es konnte überraschend festgestellt werden, dass ein Kühl- und / oder Gefriergerät umfassend einen Gerätekorpus sowie eine Türbaugruppe, mit einem Türelement, wobei das Türelement an seinem Randabschnitt an einem Rahmenprofil angeordnet ist, wobei die Türbaugruppe in Schließstellung über wenigstens ein Dichtelement am Gerätekorpus angeordnet ist, wobei das Rahmenprofil in Profilängsrichtung an wenigstens einer Seite eine Basisschicht sowie wenigstens eine mit dieser verbundene Deckschicht aufweist, wobei die Basisschicht sowie die Deckschicht aus einem polymeren Werkstoff hergestellt ist, wobei die Deckschicht in Profillängsrichtung in wenigstens einem Eckbereich des Rahmenprofils eine größere Wanddicke aufweist als in einem Seitenbereich, wobei im Eckbereich des Rahmenprofils die Basisschicht und / oder die Deckschicht wenigstens eine Fase aufweisen, die in etwa in einem stumpfen Winkel, bezogen auf wenigstens einen Seitenbereich, ausgebildet ist, sich vorteilhafterweise dadurch auszeichnet, dass die am Eckbereich des Rahmenprofils anliegenden Seitenbereiche des Rahmenprofils in Profillängsrichtung dabei eine äquidistante Wanddicke aufweisen, die geringer ist, als die im Eckbereich. Durch dieses erfindungsgemäße Kühl- und / oder Gefriergerät kann eine optisch ansprechende Türbaugruppe zur Verfügung gestellt werden, bei der insbesondere das Rahmenprofil, welches aus polymerem Werkstoff hergestellt ist, eine ansprechende Glasoptik aufweist, die teilweise einen gewissen 3D-Effekt insbesondere im Eckbereich aufweist. Insbesondere wenn bei der Türbaugruppe des erfindungsgemäßen Kühl- und / oder Gefriergerätes ein Türelement aus einem Scheibenverbund aus Glas eingebracht ist, ergibt sich bei dem erfindungsgemäßen Kühl- und / oder Gefriergerät ein hochwertiger optischer Eindruck.

Insbesondere die Kombination verschiedener polymerer Werkstoffe für die Basisschicht sowie die Deckschicht des Rahmenprofils lässt hier vielfältige Gestaltungsmöglichkeiten zu, in dem beispielsweise die Basisschicht in einem glasähnlichen Farbton eingefärbt ist wie beispielsweise blau bzw. grün und die Deckschicht aus einem transparenten bzw. transluzenten Material besteht.

Es hat sich weiterhin als sehr vorteilhaft herausgestellt, dass insbesondere im Eckbereich des Rahmenprofils die Basisschicht und / oder die Deckschicht wenigstens einen Radius aufweisen. In dieser vorteilhaften Ausgestaltung entsteht speziell im Eckbereich beim Betrachter der Eindruck, dass das Rahmenprofil eine gewisse Tiefenwirkung aufweist und die farbige Basisschicht in einer 3D-Darstellung erkennbar ist.

Es hat sich weiterhin als ebenfalls vorteilhaft herausgestellt, dass im Eckbereich des Rahmenprofils die Basisschicht und / oder die Deckschicht wenigstens eine Fase aufweisen, die in etwa in einem stumpfen Winkel bezogen auf den Seitenbereich ausgebildet ist. Durch diese geometrische Ausgestaltung insbesondere im Eckbereich des Rahmenprofils lässt sich beim erfindungsgemäßen Kühl- und / oder Gefriergerät eine optisch äußerst ansprechende Türbaugruppe zur Verfügung stellen, die neben ihrer optisch ansprechenden Wirkung auch wirtschaftlich und kostengünstig herstellbar ist.
Dabei hat es sich weiterhin als vorteilhaft bei dem erfindungsgemäßen Kühl- und / oder Gefriergerät herausgestellt, dass insbesondere im Eckbereich eine Kombination aus Radius und Fase eine besondere Glasoptik erzeugen.

In einer weiteren vorteilhaften Ausgestaltung des erfindungsgemäßen Kühl- und / oder Gefriergerätes weist der polymere Werkstoff der Deckschicht eine Lichttransmission nach ASTM D-1003 von wenigstens 40 % auf. Durch diese beispielsweise transluzente Ausgestaltung der Deckschicht bis hin zu Lichttransmissionswerten von 70 % bis 80 % und einem transparenten polymeren Werkstoff der Deckschicht lassen sich verschiedene Türbaugruppen mit optisch unterschiedlichen Türelementen, insbesondere Rahmenprofilen erstellen, die insbesondere bei Verwendung eines Türelementes aus einem Scheibenverbund aus Glas optisch äußerst ansprechend und wirtschaftlich herstellbar sind.

Es hat sich weiterhin als vorteilhaft herausgestellt, dass bei dem erfindungsgemäßen Kühl- und / oder Gefriergerät der polymere Werkstoff der Deckschicht einen Glanzgrad nach DIN 67530 bei Normlichtart A unter einem Winkel von 10° bis 90° von wenigstens 50 % aufweist. In dieser vorteilhaften Ausgestaltung insbesondere auch unter der Verwendung unterschiedlicher polymerer Werkstoffe für die Basisschicht sowie die Deckschicht ergibt sich eine verbesserte Kratzbeständigkeit der Deckschicht bei gleichzeitig einer hochwertigen, an eine lackierte Fläche erinnernde, Profiloberfläche.

Das erfindungsgemäße Kühl- und / oder Gefriergerät ist vorteilhafterweise so ausgebildet, dass die Deckschicht in Profillängsrichtung in wenigstens einem Eckbereich des Rahmenprofils in etwa die doppelte Wanddicke, vorzugsweise die 2,5-fache Wanddicke, der Basisschicht aufweist. Die am Eckbereich des Rahmenprofils anliegenden Seitenbereiche des Rahmenprofils weisen in Profillängsrichtung dabei eine äquidistante Wanddicke auf, die geringer ist, als die im Eckbereich. Dies führt vorteilhafterweise dazu, dass insbesondere im Eckbereich des Rahmenprofils der Türbaugruppe ein 3D-Glaseffekt auftritt, der insbesondere der Türbaugruppe einen optisch hochwertigen Eindruck verleiht. In Kombination mit verschiedenen polymeren Werkstoffen der Basisschicht sowie der Deckschicht, eine Kombination verschiedener Glanzgrade bzw. Lichttransmissionswerte der Deckschicht lassen hier vielfältige Gestaltungsmöglichkeiten für optisch hochwertige und wirtschaftlich herstellbare Türbaugruppen für das erfindungsgemäße Kühl- und / oder Gefriergerät zu.

Ein weiterer Vorteil des erfindungsgemäßen Kühl- und / oder Gefriergerätes wird darin gesehen, dass der polymere Werkstoff der Basisschicht und/oder der Deckschicht des Rahmenprofils organische und/oder anorganische Füllstoffe und/oder Farbmittel in einer Menge von etwa 0,01 bis 45 %, vorzugsweise 0,1 bis 25 %, bezogen auf die Gesamtmasse, eingelagert enthält. In dieser vorteilhaften Ausgestaltung kann bspw. der Elastizitätsmodul erhöht werden, was zu einer besseren Steifigkeit des Rahmenprofiles insbesondere bei größeren Kühl- und / oder Gefriergeräten führt. Ebenfalls vorteilhaft kann damit einerseits die Transmission und/oder anderseits die farbliche Gestaltung der Basisschicht und/oder der Deckschicht des Rahmenprofils vielfältig variiert werden.

Weiterhin vorteilhaft ist es, wenn die anorganischen Füllstoffe und/oder Farbmittel partikelförmig und/oder sphärisch und/oder faserförmig und/oder plättchenförmig und/oder stäbchenförmig ausgebildet sind, ausgewählt aus der Gruppe der Elemente Kohlenstoff, Silicium, Aluminium, Calcium, Titan, Eisen, Zink und Zinn, was insbesondere in der Dimensionierung und Gestaltung der bspw. der Dicke der Basisschicht und/oder der Deckschicht des Rahmenprofils und der entsprechenden statischen Anforderungen für das erfindungsgemäße Kühl- und / oder Gefriergerät vorteilhaft ist.

Es hat sich ebenfalls als vorteilhaft herausgestellt, wenn die organischen Füllstoffe und/oder Farbmittel der Basisschicht und/oder der Deckschicht des Rahmenprofils partikelförmig und/oder sphärisch und/oder faserförmig und/oder plättchenförmig und/oder stäbchenförmig ausgebildet sind, ausgewählt aus der Gruppe der Elemente Kohlenstoff, Wasserstoff und Sauerstoff. Diese lassen die kostengünstige Herstellung der Basisschicht und/oder der Deckschicht des Rahmenprofils zu, welche insbesondere Vorteile hinsichtlich der Recycelbarkeit des erfindungsgemäßen Kühl- und / oder Gefriergerätes realisiert, beispielsweise bei der Verbrennung desselben.

Es hat sich als vorteilhaft erwiesen, wenn als Farbmittel zur Einfärbung der Formmasse Pigmente zu Einsatz kommen, die ausgewählt sind aus anorganischen Pigmenten wie Titandioxid, Zinkoxid, Eisenoxidschwarz, Spinellschwarz, Rotpigmenten, Gelbpigmenten, Grünpigmenten, Blaupigmenten, Braunpigmenten und/oder aus organischen Pigmenten wie Ruß, Schwarzpigmenten, Gelbpigmenten, Rotpigmenten, Grünpigmenten, Blaupigmenten, Violettpigmenten, Braunpigmenten.

Alternativ lassen sich Farbstoffe, wie gelbe, rote, grüne, blaue, violette, oder braune Farbstoffe vorteilhaft zur Einfärbung einsetzen.
Es ist auch möglich, die Einfärbung mit anderen Farbmitteln mit Trägerrohstoffen, wie flüssigen oder pastösen Trägerrohstoffen oder mit Farbmasterbatches vorzunehmen.

Dabei hat es sich weiterhin als sehr vorteilhaft herausgestellt, dass die Basisschicht und / oder die Deckschicht des Rahmenprofils aus einem polymeren Werkstoff hergestellt ist, ausgewählt aus der Gruppe wie Polyvinylchlorid (PVC); Polyolefin, wie Polypropylen (PP) oder Polyethylen (PE); einem styrolbasiertem Polymer, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polycarbonate (PC); Polymethylmethacrylat (PMMA); Polyphenylenoxid (PPO); Polyetheretherketon (PEEK); Polyphenylensulfid (PPS); Liquid Crystal Polymer (LCP); Polyamidimide (PAI); Polyvinylidenfluorid (PVDF); Polyphenylsulfon (PPSU); Polyaryletherketon (PAEK); Polyacrylnitril (PAN); Polychlortrifluorethylen (PCTFE); Polyetherketon (PEK); Polyimid (PI); Polyisobuten (PIB); Polyphthalamid (PPA); Polypyrrol (PPY);Polytetrafluorethylen (PTFE); Polyurethan (PUR); Polyvinylalkohol (PVA); Polyvinylacetat (PVAC); Polyvinylidenchlorid (PVDC) sowie Mischungen aus wenigstens zwei diesen Materialien.

Die Erfindung soll nun an diesen nicht einschränkenden Ausführungsbeispielen näher beschrieben werden.

Es zeigen:
- Fig. 1: perspektivische Ansicht eines Kühl- und / oder Gefriergerätes mit einer Türbaugruppe in schematischer Darstellung;
- Fig. 2: Schnittansicht eines Teiles des Kühl- und / oder Gefriergerätes aus Fig. 1 entlang einer Linie A-A;
- Fig. 3: Schnittansicht eines Teiles eines weiteren erfindungsgemäßen Kühl- und / oder Gefriergerätes;
- Fig. 4: Schnittansicht eines Teiles eines weiteren erfindungsgemäßen Kühl- und / oder Gefriergerätes.
- Fig. 5: perspektivische Ansicht eines Kühl- und / oder Gefriergerätes mit einer Türbaugruppe in schematischer Darstellung;
- Fig. 6: Schnittansicht eines Teiles des Kühl- und / oder Gefriergerätes aus Fig. 5;

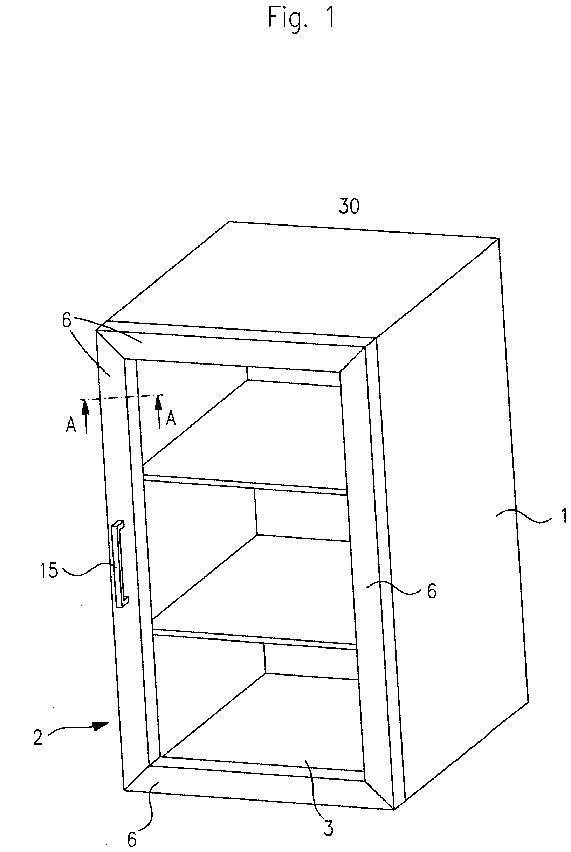

Das in der Fig. 1 dargestellte erfindungsgemäße Kühl- und / oder Gefriergerät zeigt einen im Wesentlichen kubischen, das heißt rechteckigen bzw. quadratischen Gerätekorpus 1, der frontseitig an seiner Sichtseite offen ausgebildet und durch eine Türbaugruppe 2 verschließbar ist. Die Türbaugruppe 2 umfasst ein Türelement 3, welches an seinem hier nicht sichtbaren Randabschnitt 5 von einem Rahmenprofil 6 aufgenommen ist.
Das erfindungsgemäße Kühl- und / oder Gefriergerät gemäß der Fig. 1 ist in Schließstellung gezeichnet, wobei die Türbaugruppe 2 über eine Dichtung verfügt, welche in dieser Darstellung nicht erkennbar ist, und so am Gerätekorpus 1 angeordnet ist.
Die Türbaugruppe 2 ist über eine an sich bekannte vertikale Türschwenkachse schwenkbar am Gerätekorpus 1 gelagert, so dass sie unter Zuhilfenahme des Griffes 15 von der dargestellten Schließstellung in eine geöffnete Stellung überführbar ist um die in der Fig. 1 auf der rechten Seite der Türbaugruppe 2 liegende Schwenkachse.
Das in der Türbaugruppe 2 angeordnete Türelement 3 ist in diesem Ausführungsbeispiel transparent, aus Glas bestehend, ausgebildet, so dass der Innenraum des erfindungsgemäßen Kühl- und / oder Gefriergerätes von außen in der dargestellten Schließstellung erkennbar ist.

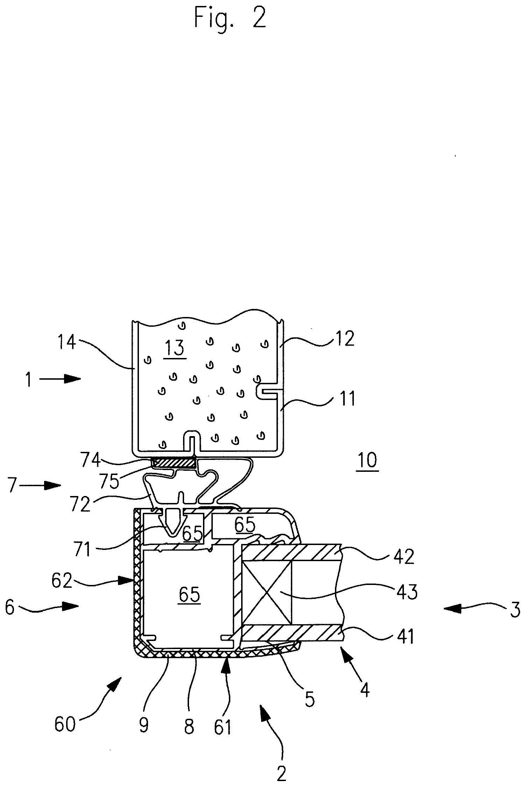

In Fig. 2 ist eine Schnittansicht eines Teiles des erfindungsgemäßen Kühl- und / oder Gefriergerätes aus Fig. 1 entlang der Linie A-A dargestellt.
Das Kühl- und / oder Gefriergerät umfasst einen Gerätekorpus 1 sowie eine Türbaugruppe 2 mit einem Türelement 3. Das Türelement 3 weist in diesem Ausführungsbeispiel einen Scheibenverbund 4 auf, der an seinem Randabschnitt 5 von einem Rahmenprofil 6 aufgenommen ist.
Der das Türelement 3 bildende Scheibenverbund 4 weist in diesem Ausführungsbeispiel eine äußere Scheibe 41, eine innere Scheibe 42 sowie einen dazwischen positionierten Abstandshalter 43 auf. Dabei ist die innere Scheibe 42 zum Innenraum 10 des Kühl- und / oder Gefriergerätes positioniert, während die äußere Scheibe 41 in den Raum weist ist, in dem das Kühl- und / oder Gefriergerät aufgestellt ist.
Das Rahmenprofil 6 ist in diesem Ausführungsbeispiel so ausgebildet, dass es eine dem Randabschnitt 5 des Scheibenverbundes 4 gegenüberliegend angeordnete etwa U-förmige Aufnahme aufweist, die den Randabschnitt 5 des Scheibenverbundes 4 in sich aufnimmt, der wiederum im Allgemeinen über eine stoffschlüssige Verbindung wie beispielsweise Verkleben im Rahmenprofil 6 fixiert ist. Das Rahmenprofil 6 ist in diesem Ausführungsbeispiel als Hohlprofil mit den Hohlkammern 65 ausgebildet.
Das Rahmenprofil 6 weist in einer Hohlkammer 65 eine Dichtung 7 auf, welche über das Rastelement 71 in der Hohlkammer 65 des Rahmenprofils 6 formschlüssig angeordnet ist. Die Türbaugruppe 2 ist hier in Schließstellung des Kühl- und / oder Gefriergerätes dargestellt und über die Dichtung 7 am Gerätekorpus 1 angeordnet.
Die Dichtung 7 weist in diesem Ausführungsbeispiel eine Außenwand 72, eine Mittelwand sowie eine Innenwand auf, die aus einem weichelastischen Werkstoff mit einer Shore-Härte A von 80 hergestellt sind. Die Außenwand 72 sowie die Mittelwand der Dichtung 7 weisen einen Aufnahmeraum 73 auf, in dem ein Magnet 74 angeordnet ist.
Das Kühl- und / oder Gefriergerät umfasst einen Gerätekorpus 1, der in diesem Ausführungsbeispiel aus einem Innenkorpus 12 sowie einem davon beabstandet angeordneten Außenkorpus 14 gebildet ist, die aus einem metallischen Werkstoff hergestellt sind.
An den freien Enden des Innenkorpus 12 sowie des Außenkorpus 14 ist ein Rahmenprofil 11 kraftschlüssig angeordnet, welches in diesem Ausführungsbeispiel aus dem polymeren Werkstoff hergestellt ist. Das Rahmenprofil 11 ist in diesem Ausführungsbeispiel etwa L-förmig ausgebildet, wobei in dem Innenraum sowie zwischen dem Innenkorpus 12 sowie dem Außenkorpus 14 des Gerätekorpus 1 ein Isolationselement 13 angeordnet ist, welches als Schaumstoff mit einer Dichte von etwa 10 bis 60 kg/ m³ aus dem Werkstoff Polyurethan gebildet ist.
Ein weiterer Vorteil dieses Ausführungsbeispiels wird darin gesehen, dass insbesondere der im Scheibenverbund 4 angeordnete Abstandshalter 43, der beispielsweise aus metallischem Werkstoff hergestellt ist, eine thermische Schwachstelle darstellt, welche jedoch vorteilhafterweise durch die am Rahmenprofil 6 am Randabschnitt 5 des Scheibenverbundes 4 angeordnete, einstückig verbundene, Hohlkammer 65 nochmals zusätzlich thermisch isoliert ist.
Das Rahmenprofil 6 weist in diesem Ausführungsbeispiel eine Basisschicht 8 sowie eine mit dieser verbundene Deckschicht 9 auf.

Die Basisschicht 8 ist aus dem polymeren Werkstoff ABS hergestellt und weiß eingefärbt. Die Deckschicht 9 ist in diesem Ausführungsbeispiel aus dem polymeren Werkstoff PMMA hergestellt und weist eine Lichttransmission nach ASTM D-1003 von etwa 70 %, ist also transparent ausgebildet. In den Seitenbereichen 61, 62 des Rahmenprofils 6 weisen die Basisschicht 8 sowie die Deckschicht 9 jeweils eine etwa äquidistante Wanddicke auf, wobei die Deckschicht 9 etwa die doppelte Wanddicke gegenüber der Basisschicht 8 aufweist.

Im Eckbereich 60 des Rahmenprofils 6 weist die Deckschicht 9 eine größere Wanddicke als im Seitenbereich 61, 62 auf. Der Eckbereich 60 des Rahmenprofils 6 ist in diesem Ausführungsbeispiel so ausgebildet, dass die Deckschicht 9 an ihrer äußeren Oberfläche einen Radius aufweist von etwa R5, während die an der Deckschicht 9 angeordnete Basisschicht 8 eine Fase aufweist, die in etwa einem stumpfen Winkel zu den Seitenbereichen 61, 62 des Rahmenprofils 6 ausgebildet ist.
In diesem Ausführungsbeispiel weist die Deckschicht 9 in Profillängsrichtung im Eckbereich 60 des Rahmenprofils 6 etwa die dreifache Dicke der Basisschicht 8 sowie etwa die doppelte Wanddicke zu den Seitenbereichen 61, 62 des Rahmenprofils 6 auf.
Durch diese vorteilhafte Ausgestaltung insbesondere durch ein Türelement 3 welches als Scheibenverbund 4 aus Glas ausgebildet ist, weist das erfindungsgemäße Kühl- und / oder Gefriergerät eine Türbaugruppe 2 auf, die optisch ansprechend und hochwertig ist, die insbesondere im Eckbereich 60 des Rahmenprofils 6 einen 3D-Glaseffekt erzielt, so dass die gesamte Türbaugruppe 2 als aus einem Glasmaterial hergestellt erscheint.
Durch eine Deckschicht 9 aus dem polymeren Werkstoff PMMA ergeben sich für das erfindungsgemäße Kühl- und / oder Gefriergerät weiterhin Vorteile hinsichtlich der Kratzbeständigkeit der Oberfläche insbesondere der nicht beschichteten bzw. lackierten Deckschicht 9 des Rahmenprofils 6 sowie auch eine hohe UV-Beständigkeit.
Weiterhin wird durch die Einfärbung der Basisschicht 8 des Rahmenprofils 6 in diesem Ausführungsbeispiel in Weiß die Anmutung einer hellen Glasoptik erzielt. Es liegt jedoch auch im Rahmen, die Basisschicht 8 in anderen Farben, die glasähnlich sind, wie beispielsweise grün, blau, rot und dergleichen einzufärben.

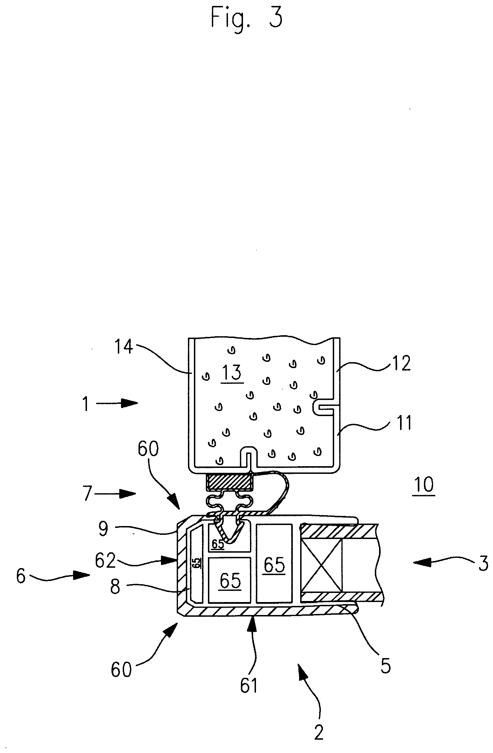

In der Fig. 3 ist eine Schnittansicht eines Teiles eines weiteren erfindungsgemäßen Kühl- und / oder Gefriergerätes dargestellt. Dieses umfasst einen Gerätekorpus 1 sowie eine Türbaugruppe 2 mit einem Türelement 3, wobei das Türelement 3 an seinem Randabschnitt 5 an einem Rahmenprofil 6 angeordnet ist, wobei die Türbaugruppe 2 in Schließstellung über wenigstens ein Dichtelement 7 am Gerätekorpus 1 angeordnet ist.

Das Türelement 3 ist in diesem Ausführungsbeispiel als einzelnes Isolierelement ausgebildet.
Das Rahmenprofil 6 weist eine etwa U-förmige Aufnahme für den Randbereich 5 des Türelementes 3 auf, der diesen umschließt. Das Rahmenprofil 6 ist in diesem Ausführungsbeispiel so ausgebildet, dass es verschiedene Hohlkammern 65 aufweist, die durch dünne Wände voneinander beabstandet angeordnet sind.
Das Rahmenprofil 6 weist in Profillängsrichtung eine Basisschicht 8 sowie eine mit dieser verbundenen Deckschicht 9 auf.

Die Basisschicht 8 ist in diesem Ausführungsbeispiel aus einem blau eingefärbten, polymeren Werkstoff Polycarbonat hergestellt, während die Deckschicht 9 ebenfalls aus einem polymeren Werkstoff Polycarbonat hergestellt ist, der jedoch eine Lichttransmission nach ASTM D-1003 von etwa 45 % aufweist.
Im Seitenbereich 61 weist das Rahmenprofil 6 nur die Deckschicht 9 auf.
Im Seitenbereich 62 ist das Rahmenprofil 6 so ausgebildet, dass es eine Basisschicht 8 sowie eine mit dieser verbundenen Deckschicht 9 aufweist.
Im Eckbereich 60 des Rahmenprofils 6 weist sowohl die Basisschicht 8 als auch die Deckschicht 9 eine Fase auf, die in etwa in einem stumpfen Winkel bezogen auf den Seitenbereich 61, 62 ausgebildet ist.
Dabei ist die Wanddicke der Basisschicht 8 im Seitenbereich 62 kleiner als die Wanddicke der Deckschicht 9, wobei insbesondere im Eckbereich 60 die Deckschicht 9 in Profillängsrichtung des Rahmenprofils 6 eine größere Wanddicke aufweist als im Seitenbereich 61. Die Fase der Basisschicht 8 und der Deckschicht 9 sind in diesem Ausführungsbeispiel in etwa 135° bezogen auf die Seitenbereiche 61, 62 ausgebildet.
Die Basisschicht 8 ist in diesem Ausführungsbeispiel in der dem Seitenbereich 62 gegenüberliegenden Hohlkammer 65 angeordnet
Das Rahmenprofil 6 weist an seiner dem Seitenbereich 61 gegenüberliegenden Seite eine Hohlkammer 65 auf, in der das Dichtelement 7 eingebracht ist. Die Türbaugruppe 2 ist in Schließstellung über dieses Dichtelement 7 am Gerätekorpus 1 angeordnet.
Der Gerätekorpus 1 weist einen Außenkorpus 14, einen Innenkorpus 12 sowie ein diese verbindendes Profilelement 11 auf. Zwischen dem Außenkorpus 14 und dem Innenkorpus 12 ist ein Isolationselement 13 in Form eines geschäumten Werkstoffes eingebracht.

Durch die vorteilhafte Ausgestaltung insbesondere des Eckbereiches 60 des Rahmenprofils 6 der Türbaugruppe 2 entsteht zusammen mit dem Türelement 3 eine nahezu geschlossene Oberfläche, die optisch ansprechend ist und bei der der Übergang zwischen dem Rahmenprofil 6 zum Türelement 3 eine Glasoptik.

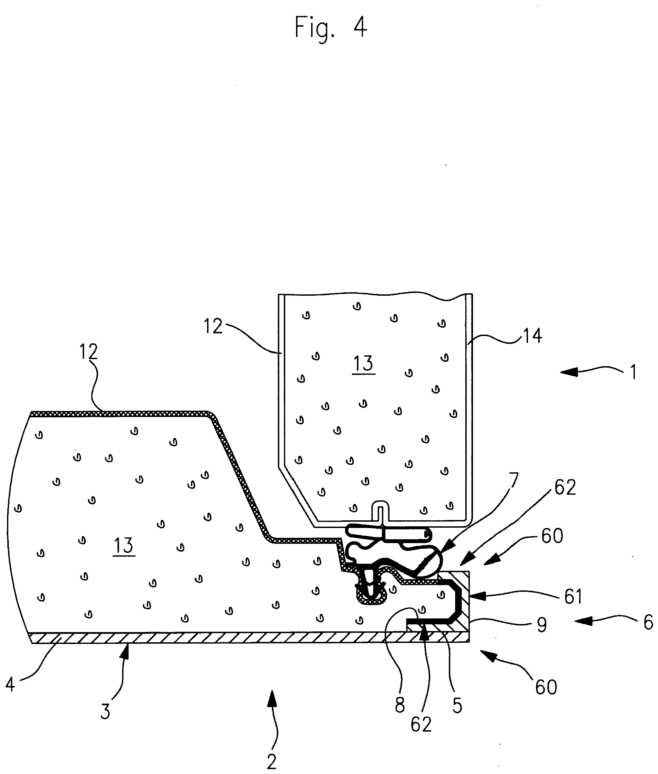

In Fig. 4 ist eine Schnittansicht eines weiteren Teils eines erfindungsgemäßen Kühl- und / oder Gefriergerätes dargestellt. Dieses Kühl- und / oder Gefriergerät umfasst einen Gerätekorpus 1 sowie eine Türbaugruppe 2, mit einem Türelement 3, welches in diesem Ausführungsbeispiel als nicht transparente bzw. durchsichtige Tür ausgebildet ist, wobei das Türelement 3 an seinem Randabschnitt 5 an einem Rahmenprofil 6 angeordnet ist, wobei die Türbaugruppe 2 in Schließstellung über ein Dichtelement 7 am Gerätekorpus 1 angeordnet ist.
Die Türbaugruppe 3 sowie der Gerätekorpus 1 umfassen jeweils einen Innenkorpus 12 sowie einen daran angeordnetem Dekorelement 14 bspw. aus Glas, Kunststoff, Holz, Metall und dergleichen, die so voneinander beanstandet angeordnet sind, dass dazwischen ein Isolationselement 13 einbringbar ist.
Das am Randabschnitt 5 des Türelementes 3 angeordnete Rahmenprofil 6 ist in diesem Ausführungsbeispiel im Querschnitt etwa U-förmig ausgebildet und weist in Profillängsrichtung eine Basisschicht 8 sowie ein damit verbundene Deckschicht 9 auf.

Die Basisschicht 8 ist in diesem Ausführungsbeispiel aus Polyamid hergestellt und in der Farbe Hellgrün eingefärbt.
Die Deckschicht 9 ist in diesem Ausführungsbeispiel aus dem polymeren Werkstoff PMMA hergestellt und so transparent ausgebildet, dass eine Lichttransmission nach ASTM D-1003 von etwa 60 % realisiert ist, während die Oberfläche der Deckschicht 9 einen Glanzgrad nach DIN 67530 von etwa 55 % aufweist.
Die Deckschicht 9 ist in Profillängsrichtung des Rahmenprofils 6 im Eckbereich 60 mit einer größeren Wanddicke ausgebildet als im Seitenbereich 61, 62 des Rahmenprofils 6.
In diesem Ausführungsbeispiel weist die Basisschicht 8 eine Fase auf, die in etwa in einem stumpfen Winkel von ca. 150° bezogen auf die Seitenbereiche 61, 62 des Rahmenprofils 6 ausgebildet ist. Die Deckschicht 9 ist im Eckbereich 60 des Rahmenprofils 6 so ausgebildet, dass sie hier einen Radius von etwa R2 an seiner Außenseite aufweist.

An der der Basisschicht 8 gegenüberliegenden Innenseite der Deckschicht 9 weist diese ebenfalls eine Fase auf, die in einem stumpfen Winkel von etwa 150° ausgebildet ist.
Die Basisschicht 8 und die Deckschicht 9 sind in diesem Ausführungsbeispiel in den Seitenbereichen 61, 62 in etwa gleich dick also äquidistant ausgebildet.

Im Eckbereich 60 des Rahmenprofils 6 weist die Deckschicht 9 etwa die 3,5-fache Wanddicke der Basisschicht 8 auf, so dass insbesondere in diesem Eckbereich 60 ein 3D-Glaseffekt erzielbar ist, welcher sowohl durch die Wahl der Werkstoffe, als auch deren Einfärbung, der Lichttransmission sowie dem Glanzgrad und der Geometrie im Eckbereich geschuldet sind.

Insbesondere durch die Kombination der verschiedenen polymeren Werkstoffe für die Basisschicht 8 sowie die Deckschicht 9 sowie die Variation der Geometrie des Eckbereiches 60 des Rahmenprofils 6 sind hier verschiedenste Möglichkeiten für eine optisch ansprechende Türbaugruppe 2 durch das Rahmenprofil 6 möglich.

Durch die Kombination der Werkstoffe sowie der Einfärbung bzw. Lichttransmission in Verbindung mit der Gestaltung des Eckbereiches 60 des Rahmenprofils 6 sind hier vielfältigste optische Variationen und Gestaltungsmöglichkeiten herstellbar, die entsprechend den optischen Anforderungen für das erfindungsgemäße Kühl- und / oder Gefriergerät bzw. den zu verbauenden Türbaugruppen 2 bzw. Türelementen 3 sowohl optisch ansprechend als auch wirtschaftlich sinnvoll, kombinierbar sind.

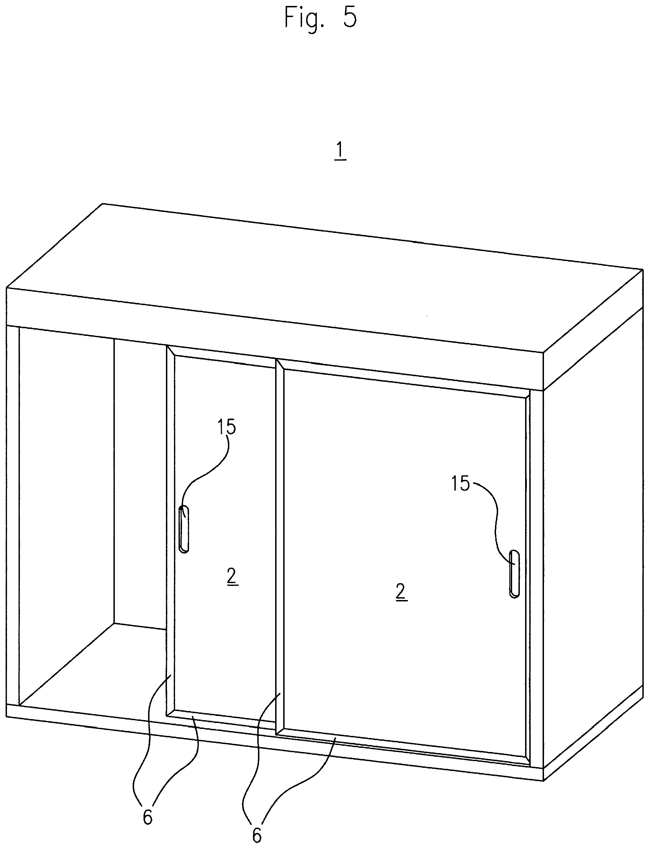

Das in der Fig. 5 dargestellte erfindungsgemäße Kühl- und / oder Gefriergerät zeigt einen im Wesentlichen kubischen, das heißt rechteckigen bzw. quadratischen Gerätekorpus 1, der frontseitig an seiner Sichtseite offen ausgebildet und durch zwei Türbaugruppen 2 verschließbar ist.
Die Öffnung des Gerätekorpus 1 ist durch die Türbaugruppen 2 verschließbar, wobei die rechts angeordnete Türbaugruppe 2 in der geschlossenen Stellung dargestellt ist, während die linke Türbaugruppe 2 in einer Offenstellung dargestellt ist und wobei zwischen der Längsseite der linken Türbaugruppe 2 und der Seitenwand des Gerätekorpus 1 eine Öffnung entsteht.
Bei dem erfindungsgemäßen Kühl- und / oder Gefriergerät sind die Türbaugruppen 2 so angeordnet, dass diese parallel zueinander gegeneinander bewegbar und jeweils von der geschlossenen Stellung in eine offene Stellung bewegbar sind.

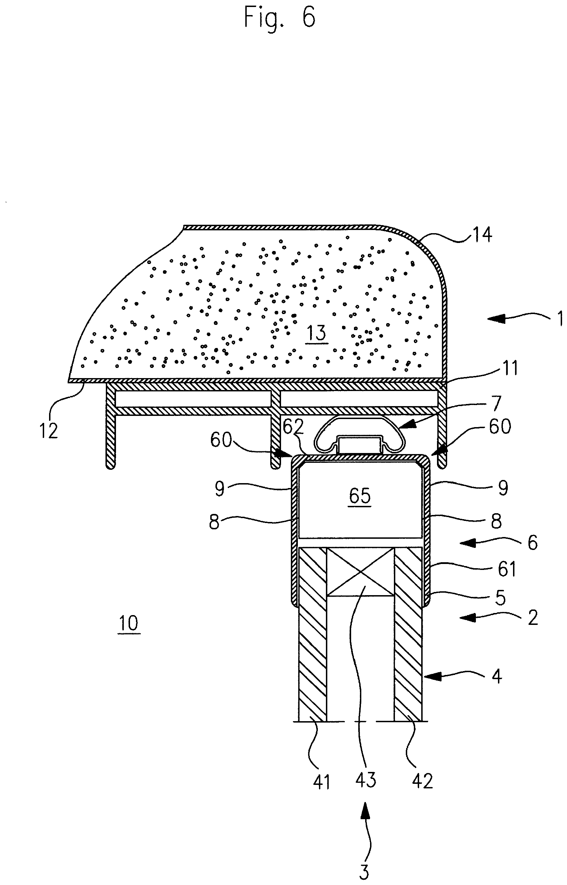

In der Fig. 6 ist eine Schnittansicht eines Teiles des Kühl- und / oder Gefriergerätes aus der Fig. 5 dargestellt.
Das Kühl- und / oder Gefriergerät umfasst einen Gerätekorpus 1 sowie eine Türbaugruppe 2 mit einem Türelement 3. Das Türelement 3 weist in diesem Ausführungsbeispiel einen Scheibenverbund 4 auf, der an seinem Randabschnitt 5 von einem Rahmenprofil 6 aufgenommen ist.
Der das Türelement 3 bildende Scheibenverbund 4 weist in diesem Ausführungsbeispiel eine äußere Scheibe 42, eine innere Scheibe 41 sowie einen dazwischen positionierten Abstandshalter 43 auf. Dabei ist die innere Scheibe 41 zum Innenraum 10 des Kühl- und / oder Gefriergerätes positioniert, während die äußere Scheibe 42 in den Raum weist, in dem das Kühl- und / oder Gefriergerät aufgestellt ist.

Das Rahmenprofil 6 ist in diesem Ausführungsbeispiel so ausgebildet, dass es eine dem Randabschnitt 5 des Scheibenverbundes 4 gegenüberliegend angeordnete etwa U-förmige Aufnahme aufweist, die den Randabschnitt 5 des Scheibenverbundes 4 in sich aufnimmt, der wiederum im Allgemeinen über eine stoffschlüssige Verbindung, wie beispielsweise Verkleben, im Rahmenprofil 6 fixiert ist.
Das Rahmenprofil 6 ist in diesem Ausführungsbeispiel als Hohlprofil mit einer Hohlkammer 65 ausgebildet.

Das Kühl- und / oder Gefriergerät ist in diesem Ausführungsbeispiel in Schließstellung dargestellt, so dass die Türbaugruppe 2 über das Dichtelement 7 am Gerätekorpus 1 angeordnet ist.
Das Dichtprofil 7 ist in diesem Ausführungsbeispiel an einem Profilelement 11 angeordnet, welches direkt am Innenkorpus 12 des Gerätekorpus 1 angeordnet ist.
Der Gerätekorpus 1 ist in diesem Ausführungsbeispiel aus dem Innenkorpus 12, dem Außenkorpus 14 und einem dazwischen angeordneten Isolierelement 13 ausgebildet.

Die Türbaugruppe 2 ist in diesem Ausführungsbeispiel so im Gerätekorpus 1 angeordnet, dass diese als Schiebetür ausgebildet ist, die über einen hier nicht dargestellten Griff rechtwinklig zum Gerätekorpus 1 verschiebbar ist und eine Öffnung des Kühl- und / oder Gefriergerätes freigibt.

Das Rahmenprofil 6 weist in diesem Ausführungsbeispiel eine Basisschicht 8 sowie eine mit dieser verbundene Deckschicht 9 auf. Die Basisschicht 8 ist aus dem polymeren Werkstoff Polyvinylchlorid (PVC) hergestellt und blau eingefärbt.
Die Deckschicht 9 ist in diesem Ausführungsbeispiel aus dem polymeren Werkstoff PMMA hergestellt und weist eine Lichttransmission nach ASTM D-1003 von etwa 60 % aus, ist also etwa transluzent ausgebildet.

In den Seitenbereichen 61, 62 des Rahmenprofils 6 weisen die Basisschicht 8 sowie die Deckschicht 9 jeweils eine etwa äquidistante Wanddicke auf, wobei die Deckschicht 9 etwa die 2,5-fache Wanddicke gegenüber der Basisschicht 8 aufweist.
Im Eckbereich 60 des Rahmenprofils 6 weist die Deckschicht 9 eine größere Wanddicke als im Seitenbereich 61, 62 auf.

In diesem Ausführungsbeispiel ist der Eckbereich 60 des Rahmenprofils 6 so ausgebildet, dass die Deckschicht 9 an ihrer äußeren Oberfläche einen Radius aufweist von etwa R2, während die an der Deckschicht 9 angeordnete Basisschicht 8 eine Fase aufweist, die winklig zu den Seitenbereichen 61, 62 ausgebildet ist, in diesem Ausführungsbeispiel in einem stumpfen Winkel von etwa 135°.
Die Deckschicht 9 weist in diesem Ausführungsbeispiel in Profillängsrichtung im Eckbereich 60 des Rahmenprofils 6 etwa die 5-fache Dicke der Basisschicht 8 sowie die 1,5-fache Wanddicke zu den Seitenbereichen 61, 62 der Deckschicht 9 des Rahmenprofils 6 auf.

In dieser vorteilhaften Ausführung insbesondere des Rahmenprofils 6 der Türbaugruppe 2 wird eine zudem aus einem Scheibenverbund 4 gebildeten Türelement 3 etwa analoge Optik realisiert, die insbesondere beim Öffnen und Schließen der Türbaugruppe 2 optisch sehr augenscheinlich erkennbar ist und insbesondere der Türbaugruppe 2 eine sehr hochwertige Ausstrahlung verleiht.
Ein weiterer Vorteil des erfindungsgemäßen Kühl- und / oder Gefriergerätes besteht darin, dass durch eine Deckschicht 9 aus dem polymeren Werkstoff PMMA die Oberfläche insbesondere des Rahmenprofils 6 der Türbaugruppe 2 neben einer hochwertigen Optik auch eine sehr hohe Kratzbeständigkeit der Oberfläche aufweist, insbesondere in der täglichen Nutzung des Kühl- und / oder Gefriergerätes beispielsweise im Einzelhandel.
Durch die vorteilhafte Einfärbung insbesondere der Basisschicht 8 des Rahmenprofils 6 kann eine zur Farbe des Scheibenverbunds 4 des Türelements 3 nahe liegende Einfärbung des Rahmenprofils 6 erreicht werden, so dass die gesamte Türbaugruppe 2 optisch als aus einem aus Glas bestehenden Element erscheint.

## Patentansprüche

1. Kühl- und / oder Gefriergerät umfassend einen Gerätekorpus (1) sowie eine Türbaugruppe (2), mit einem Türelement (3), wobei das Türelement (3) an seinem Randabschnitt (5) an einem Rahmenprofil (6) angeordnet ist, wobei die Türbaugruppe (2) in Schließstellung über wenigstens ein Dichtelement (7) am Gerätekorpus (1) angeordnet ist, wobei das Rahmenprofil (6) in Profillängsrichtung an wenigstens einer Seite eine Basisschicht (8) sowie wenigstens eine mit dieser verbundenen Deckschicht (9) aufweist, wobei die Basisschicht (8) sowie die Deckschicht (9) aus einem polymeren Werkstoff hergestellt ist, wobei die Deckschicht (9) in Profillängsrichtung in wenigstens einem Eckbereich (60) des Rahmenprofils (6) eine größere Wanddicke aufweist als in einem Seitenbereich (61,62)wobei im Eckbereich (60) des Rahmenprofils (6) die Basisschicht (8) und / oder die Deckschicht (9) wenigstens eine Fase aufweisen, die in etwa in einem stumpfen Winkel, bezogen auf wenigstens einen Seitenbereich (61, 62), ausgebildet ist, **dadurch gekennzeichnet, dass** die am Eckbereich (60) des Rahmenprofils (6) anliegenden Seitenbereiche (61, 62) des Rahmenprofils (6) in Profillängsrichtung dabei eine äquidistante Wanddicke aufweisen, die geringer ist, als die im Eckbereich (60).

2. Kühl- und / oder Gefriergerät nach Anspruch 1, **dadurch gekennzeichnet, dass** im Eckbereich (60) des Rahmenprofils (6) die Basisschicht (8) und / oder die Deckschicht (9) wenigstens einen Radius aufweisen.

3. Kühl- und / oder Gefriergerät nach einem der vorhergehenden Ansprüche, **dadurch gekennzeichnet, dass** die Deckschicht (9) in Profillängsrichtung in wenigstens einem Eckbereich (60) des Rahmenprofils (6) in etwa die doppelte Wanddicke, vorzugsweise die 2,5-fache Wanddicke, der Basisschicht (8) aufweist.

4. Kühl- und / oder Gefriergerät nach einem der vorhergehenden Ansprüche, **dadurch gekennzeichnet, dass** der polymere Werkstoff der Basisschicht (8) und/oder der Deckschicht (9) des Rahmenprofiles (6) organische und/oder anorganische Füllstoffe und/oder Farbmittel in einer Menge von etwa 0,01 bis 45 %, vorzugsweise 0,1 bis 25 %, bezogen auf die Gesamtmasse, eingelagert enthält.

5. Kühl- und / oder Gefriergerät nach Anspruch 6, **dadurch gekennzeichnet, dass** die anorganischen Füllstoffe und/oder Farbmittel partikelförmig und/oder sphärisch und / oder faserförmig und / oder blättchenförmig und / oder stäbchenförmig ausgebildet sind, ausgewählt aus der Gruppe der Elemente: C, Si, AI, Ca, Ti, Fe, Zn, Sn.

6. Kühl- und / oder Gefriergerät nach Anspruch 6, **dadurch gekennzeichnet, dass** die organischen Füllstoffe und/oder Farbmittel partikelförmig und/oder sphärisch und / oder faserförmig und / oder blättchenförmig und / oder stäbchenförmig ausgebildet sind, ausgewählt aus der Gruppe der Elemente C, O, H.

7. Kühl- und / oder Gefriergerät nach einem der vorhergehenden Ansprüche, **dadurch gekennzeichnet, dass** die Basisschicht (8) und/oder die Deckschicht (9) aus einem polymeren Werkstoff hergestellt ist ausgewählt aus der Gruppe wie Polyvinylchlorid (PVC); Polyolefin, wie Polypropylen (PP) oder Polyethylen (PE); einem styrolbasiertem Polymer, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polycarbonate (PC); Polymethylmethacrylat (PMMA); Polyphenylenoxid (PPO); Polyetheretherketon (PEEK); Polyphenylensulfid (PPS); Liquid Crystal Polymer (LCP); Polyamidimide (PAI); Polyvinylidenfluorid (PVDF); Polyphenylsulfon (PPSU); Polyaryletherketon (PAEK); Polyacrylnitril (PAN); Polychlortrifluorethylen (PCTFE); Polyetherketon (PEK); Polyimid (PI); Polyisobuten (PIB); Polyphthalamid (PPA); Polypyrrol (PPY);Polytetrafluorethylen (PTFE); Polyurethan (PUR); Polyvinylalkohol (PVA); Polyvinylacetat (PVAC); Polyvinylidenchlorid (PVDC) sowie Mischungen aus wenigstens zwei diesen Materialien.

## Claims

1. Refrigeration and/or freezer device comprising a device body (1) and a door assembly (2) having a door element (3), wherein the edge portion (5) of the door element (3) is arranged on a frame profile (6), wherein, in the closed position, the door assembly (2) is arranged on the device body (1) by means of at least one sealing element (7), wherein, in the profile longitudinal direction, the frame profile (6) comprises a base layer (8) and at least one cover layer (9), connected therewith, on at least one side, wherein the base layer (8) and the cover layer (9) is produced from a polymer material, wherein, in the profile longitudinal direction, the cover layer (9) has a greater wall thickness in at least one corner region (60) of the frame profile (6) than in a side region (61, 62), wherein, in the corner region (60) of the frame profile (6), the base layer (8) and/or the cover layer (9) comprise at least one chamfer which is formed so as to be approximately at an obtuse angle with respect to at least one side region (61, 62), **characterised in that** the side regions (61, 62) of the frame profile (6) adjoining the corner region (60) of the frame profile (6) have an equidistant wall thickness in the profile longitudinal direction, which wall thickness is smaller than that in the corner region (60).

2. Refrigeration and/or freezer device according to claim 1, **characterised in that**, in the corner region (60) of the frame profile (6), the base layer (8) and/or the cover layer (9) have at least one radius.

3. Refrigeration and/or freezer device according to either of the preceding claims, **characterised in that**, in the profile longitudinal direction, the cover layer (9) is of approximately twice the wall thickness, preferably 2.5 times the wall thickness, of the base layer (8), in at least one corner region (60) of the frame profile (6).

4. Refrigeration and/or freezer device according to any of the preceding claims, **characterised in that** the polymer material of the base layer (8) and/or of the cover layer (9) of the frame profile (6) contains embedded organic and/or inorganic fillers and/or colourants in an amount of from approximately 0.01 to 45%, preferably 0.1 to 25%, based on the overall mass.

5. Refrigeration and/or freezer device according to claim 6, **characterised in that** the inorganic fillers and/or colourants are formed so as to be particulate and/or spherical and/or fibrous and/or leaf-like and/or bacillary, and are selected from the group of elements C, Si, Al, Ca, Ti, Fe, Zn, Sn.

6. Refrigeration and/or freezer device according to claim 6, **characterised in that** the organic fillers and/or colourants are formed so as to be particulate and/or spherical and/or fibrous and/or leaf-like and/or bacillary, and are selected from the group of elements C, O, H.

7. Refrigeration and/or freezer device according to any of the preceding claims, **characterised in that** the base layer (8) and/or the cover layer (9) is produced from a polymer material selected from the group such as polyvinylchloride (PVC); polyolefin, such as polypropylene (PP) or polyethylene (PE); a styrene-based polymer, such as polystyrene (PS) or styrene-butadiene copolymer comprising a major styrene fraction (SB) or acrylonitrile-styrene-acrylester copolymer (ASA) or acrylonitrile-butadienestyrene copolymer (ABS) or styrene acrylonitrile (SAN); polybutylene terephthalate (PBT), polyoxymethylene (POM); polyamide (PA); polycarbonate (PC); polymethylmethacrylate (PMMA); polyphenylene oxide (PPO); polyether ether ketone (PEEK); polyphenylene sulphide (PPS), liquid crystal polymer (LCP); polyamide-imide (PAI); polyvinylidene fluoride (PVDF); polyphenylsulfone (PPSU); polyaryl ether ketone (PAEK); polyacrylonitrile (PAN); polychlorotrifluoroethylene (PCTFE); polyether ketone (PEK); polyimide (PI); polyisobutene (PIB); polyphthalamide (PPA); polypyrrole (PPY); polytetrafluoroethylene (PTFE); polyurethane (PUR); polyvinyl alcohol (PVA); polyvinyl acetate (PVAC); polyvinylidene chloride (PVDC), and mixtures of at least two of said materials.

## Revendications

1. Appareil de réfrigération et/ou de congélation comprenant un corps d'appareil (1) ainsi qu'un module de porte (2), avec un élément de porte (3), dans lequel l'élément de porte (3) est disposé au niveau de sa section de bord (5) au niveau d'un profil de cadre (6), dans lequel le module de porte (2) est disposé dans la position de fermeture par l'intermédiaire d'au moins un élément d'étanchéité (7) au niveau du corps d'appareil (1), dans lequel le profil de cadre (6) présente dans le sens longitudinal de profil au niveau d'au moins un côté une couche de base (8) ainsi qu'au moins une couche de recouvrement (9) reliée à celle-ci, dans lequel la couche de base (8) ainsi que la couche de recouvrement (9) sont fabriquées à partir d'un matériau polymère, dans lequel la couche de recouvrement (9) présente dans le sens longitudinal de profil dans au moins une zone d'angle (60) du profil de cadre (6) une épaisseur de paroi plus importante que dans une zone latérale (61, 62), dans lequel dans la zone d'angle (60) du profil de cadre (6), la couche de base (8) et/ou la couche de recouvrement (9) présentent au moins un chanfrein, qui est réalisé, par rapport à au moins une zone latérale (61, 62), selon à peu près un angle obtus, **caractérisé en ce que** les zones latérales (61, 62), reposant au niveau de la zone d'angle (60) du profil de cadre (6), du profil de cadre (6) présentent dans le sens longitudinal de profil ce faisant une épaisseur de paroi équidistante, qui est inférieure à celle dans la zone d'angle (60).

2. Appareil de réfrigération et/ou de congélation selon la revendication 1, **caractérisé en ce que** dans la zone d'angle (60) du profil de cadre (6), la couche de base (8) et/ou la couche de recouvrement (9) présentent au moins un rayon.

3. Appareil de réfrigération et/ou de congélation selon l'une quelconque des revendications précédentes, **caractérisé en ce que** la couche de recouvrement (9) présente dans le sens longitudinal de profil dans au moins une zone d'angle (60) du profil de cadre (6) à peu près le double de l'épaisseur de paroi, de préférence 2,5 fois l'épaisseur de paroi, de la couche de base (8).

4. Appareil de réfrigération et/ou de congélation selon l'une quelconque des revendications précédentes, **caractérisé en ce que** le matériau polymère de la couche de base (8) et/ou de la couche de recouvrement (9) du profil de cadre (6) contient de manière intégrée des charges et/ou des colorants organiques et/ou inorganiques en une quantité d'environ 0,01 à 45 %, de préférence de 0,1 à 25 % par rapport à la masse totale.

5. Appareil de réfrigération et/ou de congélation selon la revendication 6, **caractérisé en ce que** les charges et/ou colorants inorganiques sont réalisés en forme de particules et/ou de manière sphérique et/ou en forme de fibres et/ou en forme de petites feuilles et/ou en forme de bâtonnets, choisis parmi le groupe des éléments : C, Si, Al, Ca, Ti, Fe, Zn, Sn.

6. Appareil de réfrigération et/ou de congélation selon la revendication 6, **caractérisé en ce que** les charges et/ou colorants organiques sont réalisés en forme de particules et/ou de manière sphérique et/ou en forme de fibres et/ou en forme de petites feuilles et/ou en forme de bâtonnets, choisis parmi le groupe des éléments C, O, H.

7. Appareil de réfrigération et/ou de congélation selon l'une quelconque des revendications précédentes, **caractérisé en ce que** la couche de base (8) et/ou la couche de recouvrement (9) sont fabriquées à partir d'un matériau polymère, choisi parmi le groupe tel que le chlorure de polyvinyle (PVC) ; la polyoléfine, telle que le polypropylène (PP) ou le polyéthylène (PE) ; un polymère à base de styrène, tel que le polystyrène (PS) ou le copolymère de styrène-butadiène avec une fraction de styrène (SB) dominante ou des copolymères d'acrylonitrile-styrène-acrylate (ASA) ou des copolymères d'acrylonitrile-butadiène-styrène (ABS) ou de l'acrylonitrile styrène (SAN) ; le polytéréphtalate de butylène (PBT) ; le polytéréphtalate de polyéthylène (PET) ; le polyoxyméthylène (POM) ; le polyamide (PA) ; le polycarbonate (PC) ; le polyméthacrylate de méthyle (PMMA) ; l'oxyde de polyphénylène (PPO) ; le polyétheréthercétone (PEEK) ; le polysulfure de phénylène (PPS) ; le polymère à cristaux liquides (LCP) ; les polyamidimides (PAI) ; le polyfluorure de vinylidène (PVDF) ; le polyphénylsulfone (PPSU) ; la polyaryléthercétone (PAEK) ; le polyacrylonitrile (PAN) ; le polychlorotrifluoréthylène (PCTFE) ; la polyéthercétone (PEK) ; le polyimide (PI) ; le polyisobutène (PIB) ; le polyphtalamide (PPA) ; le polypyrrole (PPY) ; le polytétrafluoroéthylène (PTFE) ; le polyuréthane (PUR) ; l'alcool polyvinylique (PVA) ; le polyacétate de vinyle (PVAC) ; le polychlorure de vinylidène (PVDC) ainsi que des mélanges composés d'au moins deux desdits matériaux.
